# EUROPEAN PATENT SPECIFICATION

(11) **EP 2 792 870 B1**
(45) Date of publication and mention of the grant of the patent: **22.08.2018**
(21) Application number: 13164147.4
(22) Date of filing: 17.04.2013
(51) Int. Cl.: F02C 6/12, F02B 37/18

(54) **Exhaust gas turbocharger with adjusting drive**
Abgasturbolader mit Verstellantrieb
Turbocompresseur à gaz d'échappement avec commande de réglage

(43) Date of publication of application: 22.10.2014
(73) Proprietor: BMTS Technology GmbH & Co. KG, 70376 Stuttgart (DE)
(72) Inventor: Thangavelu, Kanagaraj, 641047 Jothipuram Coimbatore (IN)
(74) Representative: BRP Renaud & Partner mbB Rechtsanwälte Patentanwälte Steuerberater

(56) References cited:
- DE-A1-102010 018 740
- US-A- 4 927 325
- US-B1- 6 467 269

## Description

The present invention relates to a pneumatic adjusting drive for a wastegate valve of a turbine of an exhaust gas turbocharger of an internal combustion engine according to the preamble of claim 1. The invention additionally relates to an exhaust gas turbocharger which is equipped with such an adjusting drive.

A pneumatic adjusting drive of this kind is known from US 6 467 269 B1 and comprises a housing, in which a separating element separating a control pressure chamber from a reference pressure chamber is adjustably arranged. The adjusting drive further comprises a drive rod for the drive coupling to the wastegate valve, which is connected to the separating element in a fixed manner, a resetting spring device arranged in the housing, which drives the separating element with a preload force in the direction of the control pressure chamber, and a force adjusting device for changing the preload force with the drive rod not coupled to the wastegate valve.

An exhaust gas turbocharger for charging an internal combustion engine usually comprises a turbine which is arranged in an exhaust line of the internal combustion engine and a compressor which is drive-connected to the latter, which is arranged in a fresh air section of the internal combustion engine. To control the performance of the exhaust gas turbocharger, the turbine can be equipped with a bypass for bypassing a turbine wheel, which can be controlled with the help of a bypass valve. Such a bypass arrangement is usually described as wastegate valve. As a rule, such a wastegate valve is controlled as a function of the pressure in the fresh air section on the pressure side of the compressor, in order to avoid an excessive pressure increase in the fresh air section by opening the wastegate valve. As adjusting drive for actuating the wastegate valve, a pressure cell can therefore be employed, which is pneumatically coupled to the fresh air section.

Such an adjusting drive usually comprises a separating element in a housing, which in the housing pneumatically separates a control pressure chamber from a reference pressure chamber and which is adjustably arranged in the housing, so that the relative position of the separating element with respect to the housing depends on the pressure differential between control pressure chamber and reference pressure chamber. Such an adjusting drive is usually equipped with a drive rod, which is provided for drive-coupling to the wastegate valve and which is connected to the separating element in a fixed manner. To this end, the drive rod is led out of the housing and in the process passed through the reference pressure chamber as a rule. Furthermore, a resetting spring device is usually arranged in the housing, which drives the separating element with a preload force in the direction of the control pressure chamber. Here, the resetting spring device usually supports itself on the one side on the housing and on the separating element on the other side. If the resetting spring device operates with at least one compression spring element, the respective compression spring element is practically arranged in the control pressure chamber.

The preload force exerted on the separating element by the resetting spring device is transmitted to a valve member of the wastegate valve via the drive rod and via a drive mechanism of the wastegate valve, as a result of which on the valve member a closing force is generated, which drives the valve member into a closing position or against a valve seat. By adjusting the preload force, a response pressure can thus be adjusted, which has to be present in the control pressure chamber of the adjusting drive during the operation of the internal combustion engine in order to be able to trigger an opening movement of the separating element against the preload force of the resetting spring device and thus an opening of the wastegate valve.

The drive mechanism of the wastegate valve usually comprises a drive member arranged on the outside of the turbine, which has to be coupled to the drive rod of the adjusting drive in order to be able to transmit the adjusting forces. Establishing or disconnecting this drive coupling in this case is comparatively complicated and time consuming, since in the assembled state the adjusting drive via the drive rod introduces a pulling force into the drive member via this drive coupling in order to generate the desired closing force on the valve member. This pulling force has to be overcome when disconnecting the drive coupling. To this end, the assembler pulls the rod out of the housing of the adjusting drive manually or by mean of a tool, which involves a relatively major expenditure of force, while the drive coupling between drive rod and drive member has to be comparatively delicately disconnected at the same time. For establishing the drive coupling, the assembler is likewise forced to pull the drive rod out of the housing against the preload force of the resetting spring in order to be able to establish the drive coupling between drive rod and drive member. Since this work requires both a relatively large force and good dexterity, strength and experience are required in order to avoid damaging the adjusting drive or the wastegate valve upon assembling or upon disassembling.

Furthermore, the production of the wastegate valves on the one hand and the production of the adjusting drive on the other hand involves tolerances, as a result of which it can be necessary after the establishment of the drive coupling, to adjust or set the desired closing force of the wastegate valve. This can be realised for example by changing the length of the drive rod. In order to be able to change the length of the drive rod, however, drive coupling between drive rod and drive member has to be disconnected again. Because of this, the changing of the closing force of the wastegate valve is comparatively complicated.

The present invention therefore deals with the problem of stating an improved embodiment for an adjusting drive of the type mentioned at the outset or for an exhaust gas turbocharger equipped with such, which is characterized in particular in that the adjusting of a closing force of the wastegate valve of the assembly and disassembly of the adjusting drive is simplified.

According to the invention, this problem is solved through the subjects of the independent claims. Advantageous embodiments are subject of the dependent claims.

The invention is based on the general idea of equipping the adjusting drive with a force adjusting device, with the help of which the preload force of the resetting spring device can be changed, even when the drive rod of the adjusting drive is not drive-coupled to the wastegate valve. By doing so it is possible, in particular, to measure and adjust the preload force for as long as the adjusting drive is not yet attached to the turbine or for as long as the drive rod of the adjusting drive is not yet drive-coupled the wastegate valve. In this way, the preload force can be adjusted independently of the wastegate valve.

Furthermore, this force adjusting device also makes possible a changing of the preload force when the drive rod is drive-connected to the wastegate valve, i.e. with the adjusting drive attached to the turbine. Following this, the closing force of the wastegate valve can also be changed, i.e. adjusted by changing the preload force via the drive connection. Thus, the force adjusting device of the adjusting drive can be used in the assembled state for changing, i.e. for adjusting the closing force of the wastegate valve, as a result of which a first use according to the invention is defined.

It is possible, furthermore, in the assembled state of the adjusting drive, to adjust the pulling force which is transmitted from the drive rod via the drive coupling to the aforementioned drive member of the drive mechanism which is drive-connected to the valve member. This pulling force on the one hand correlates to the preload force of the adjusting drive and on the other hand to the closing force of the wastegate valve or of the valve member. By changing the preload force, the pulling force, which is present in the drive coupling, can thus also be changed. Advantageously, the force adjusting device can thus be used in order to reduce the pulling force to be transmitted when establishing the drive coupling between drive rod and drive member, as a result of which the establishment of this drive coupling, i.e. the mechanical connection of the drive rod to the drive member is substantially simplified. In particular, it is no longer necessary to manually pull the drive rod out of the housing. In corresponding manner, the force adjusting device can also be used for reducing the pulling force transmitted via the drive coupling when disconnecting the drive coupling between drive rod and drive member. With reduced pulling force, the drive coupling, i.e. the mechanical connection between drive rod and drive member, can be realised in a particularly simple manner. In particular, manual pulling of the drive rod out of the housing can also be omitted here. It is particularly practical in this case to reduce the pulling force substantially to the value zero with the help of the force adjusting device, which renders the establishing and disconnecting of the drive connection between drive rod and drive member particularly simple. The use of the force adjusting device as assembly aid when establishing and disconnecting the drive coupling between drive rod and drive member described above defines a second use of the force adjusting device or of the adjusting drive according to the invention.

The separating element can for example be a diaphragm, which is clamped into the housing and in the process separates the control pressure chamber from the reference pressure chamber in an air-tight manner. In this case, this diaphragm is connected to the housing at the edge in a fixed manner or arranged in at least a fixed location relative to the housing, while a central region of the diaphragm is adjustable within the housing dependent on the pressure differential between control pressure chamber and reference pressure chamber. The drive rod in this case is connected to the central adjustable region of the diaphragm. Alternatively to this, the separating element can also be a piston which is stroke-adjustably arranged in a cylinder of the housing and connected to the drive rod in a fixed manner. Other embodiments for such separating elements are likewise conceivable.

According to the present invention, the force adjusting device comprises an adjustable stop device, which limits an adjusting travel of the separating element in the direction of the control pressure chamber. With missing stop, the separating element in the case of an absent pressure differential between control pressure chamber and reference pressure chamber can adjust itself in the direction of the control pressure chamber so far until the preload force has reached the value zero. Following this, any pressure increase in the control pressure chamber leads to an adjusting movement of the separating element and ultimately to an opening movement of the wastegate valve, provided the pressure differential is sufficient to overcome the friction forces which are present in the drive system between separating element and valve member. Apart from this, the pressure differential between onflow side and outflow side of the turbine could already push open the valve member with absent closing force. By providing a stop, the resetting spring device permanently pushes the separating element with a preload force that is distinct from zero against the stop, as a result of which a preload force is defined, which first has to be overcome by the pressure differential between control pressure chamber and reference pressure chamber in order to bring about an adjusting movement of the separating element in the direction of the reference pressure chamber, which then results in the opening of the wastegate valve. Through the proposal of equipping the force adjusting device preferentially with an adjustable stop device, i.e. with an adjustable or settable stop, the preload force with which the resetting spring device drives the separating element in the direction of the control pressure chamber can be changed. Thus, with the help of the stop device, by adjusting a stop limiting the adjusting movement of the separating element in the direction of the control pressure chamber, the preload force can be adjusted.

According to the present invention, the stop device interacts with the drive rod for limiting the adjusting travel of the separating element. This embodiment is based on the consideration that the drive rod is connected to the separating element in a fixed manner, so that for limiting the adjusting travel of the separating element a limitation of the adjusting travel of the drive rod can be provided. By doing so, mechanical wear of the separating element through directly contacting a stop can be avoided.

Particularly advantageous is a further development, in which the stop device for limiting the adjusting travel of the separating element interacts with the drive rod outside the housing.: On the one hand, comparatively much installation space is available outside the housing in order to realise the adjustable stop. On the other hand, the adjustable stop is more accessible outside the housing than a stop that is arranged within the housing, as a result of which the handling of the stop device and thus also of the force adjusting device is simplified.

According to an advantageous other further development, the stop device can comprise a rod stop element assigned to the drive rod and a housing stop element assigned to the housing, wherein the two stop elements interact for limiting the adjusting travel of the separating element. Apart from this, the housing stop element can be adjusted relative to the housing with respect to its relative position. Additionally or alternatively, the rod stop element can be adjusted relative to the drive rod with respect to its relative position. The stop can thus be adjusted through the at least one adjustable stop element.

With an advantageous further development, the rod stop element can be connected to the drive rod in a fixed manner, while the housing stop element can be adjusted relative to the housing. Such a design can be realised particularly easily and cost-effectively.

With another further development, the rod stop element can be a web which is connected to the drive rod in a fixed manner, which comprises a web opening. The housing stop element comprises a threaded rod which is fixed in location relative to the housing and an adjusting nut screwed onto the threaded rod. The threaded rod is loosely passed through the web opening and the adjusting nut interacts with the web for limiting the adjusting travel of the separating element. Thus, when the separating element reaches its end position defined by the stop device, the adjusting nut bears against the web, preferentially against an opening rim enclosing the web opening. For changing the stop, the adjusting nut can be adjusted along the threaded rod. For locking an adjusted stop position, the adjusting nut can be fixed to the threaded rod for example by means of a lock nut. Instead of a lock nut, an adhesive connection for fixing the relative position can also be used for example.

With another further development, the threaded rod can be connected to the housing in a fixed manner and with the adjusting drive mounted on the exhaust gas turbocharger, loosely penetrate a fastening bracket of the exhaust gas turbocharger. The housing can now be fastened to the fastening bracket with the help of a fastening nut screwed onto the threaded rod. Thus, the threaded rod in this case serves for fixing the housing to the fastening bracket on the one hand and for adjusting the stop device or for adjusting the preload force on the other hand.

Practically, the adjusting nut can be arranged on the threaded rod between the housing and the web. By doing so it is achieved that with the help of the adjusting rod the adjusting movement of the adjusting element can be limited in the direction of the control pressure chamber. By adjusting the adjusting nut in the direction of the housing, the end position of the separating element is also adjusted in the direction of the control pressure chamber, which is accompanied by a reduction of the preload force. If, by contrast, the adjusting nut is adjusted away from the housing along the threaded rod, the end position of the separating element is also adjusted in the direction of reference pressure chamber, as a result of which the preload force increases.

An exhaust gas turbocharger according to the invention comprises a turbine, a wastegate valve and an adjusting device of the type mentioned above.

According to an advantageous embodiment of the exhaust gas turbocharger, the control pressure chamber can be pneumatically connected to a high-pressure side of a compressor of the exhaust gas turbocharger. Because of this, the charge pressure that can be adjusted with the help of the compressor can be directly controlled.

With another embodiment, the reference pressure chamber can be pneumatically connected to an ambience of the adjusting drive. Thus, the current ambient pressure serves as reference pressure, with respect to which the charge pressure is adjusted. At the same time, a quasi internal control pressure profile is achieved through this, which simplifies the incorporation of the exhaust gas turbocharger in the internal combustion engine.

With another advantageous embodiment, the wastegate valve can comprise a valve member for controlling an internal bypass of the turbine, which interacts with a valve seat, which is formed on a turbine housing. In addition, the wastegate valve comprises a drive mechanism that is drive-connected to the valve member for adjusting the valve member. This drive mechanism comprises a drive member arranged on the outside of the turbine, which is coupled to the drive rod of the adjusting drive.

Further important features and advantages of the invention are obtained from the subclaims, from the drawings and from the associated Figure description by means of the drawings.

It is to be understood that the features mentioned above and still to be explained in the following cannot only be used in the respective combination stated but also in other combinations or by themselves without leaving the scope of the present invention.

Preferred exemplary embodiments of the invention are shown in the drawings and are explained in more detail in the following description, wherein same reference characters relate to same or similar of functionally same components.

It shows, in each case schematically,
- Fig. 1: a highly simplified diagram-like representation of an exhaust gas turbocharger,
- Fig. 2: a lateral view of an adjusting drive of the exhaust gas turbocharger.

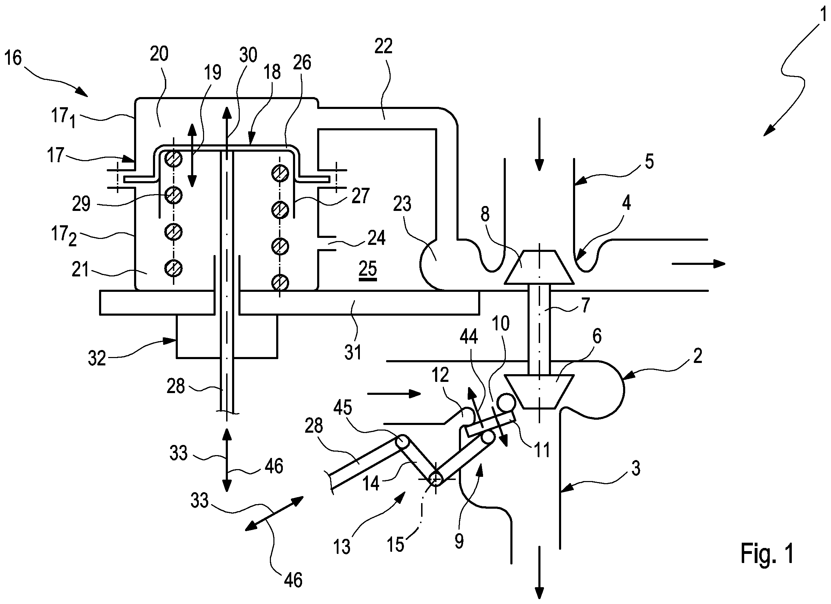

According to Fig. 1, an exhaust gas turbocharger 1 comprises a turbine 2, which is incorporated in an exhaust system 3 of an internal combustion engine which is not otherwise shown, and a compressor 4, which is incorporated in a fresh air system 5 of the internal combustion engine. A turbine wheel 6 rotating in the turbine 2 is drive-connected to a compressor wheel 8 rotating in the compressor 4 via a common driveshaft 7. The turbine 2 contains a wastegate valve 9, with the help of which an internal bypass 10 of the turbine 2, which bypasses the turbine wheel 6, can be controlled. To this end, the wastegate valve 9 comprises a valve member 11, which for controlling the bypass 10 interacts with a valve seat 12. For adjusting the valve member 11, the wastegate valve 9 has a drive mechanism 13, which is drive-connected to the valve member 11 in the interior of the turbine 2 and which on the outside on the turbine 2 comprises a drive member 14. Adjusting movements of the drive member 14 thus result in an adjusting movement of the valve member 11. The drive member 14 is a lever for example, which is pivotably arranged on the turbine 2 about a pivot axis 15.

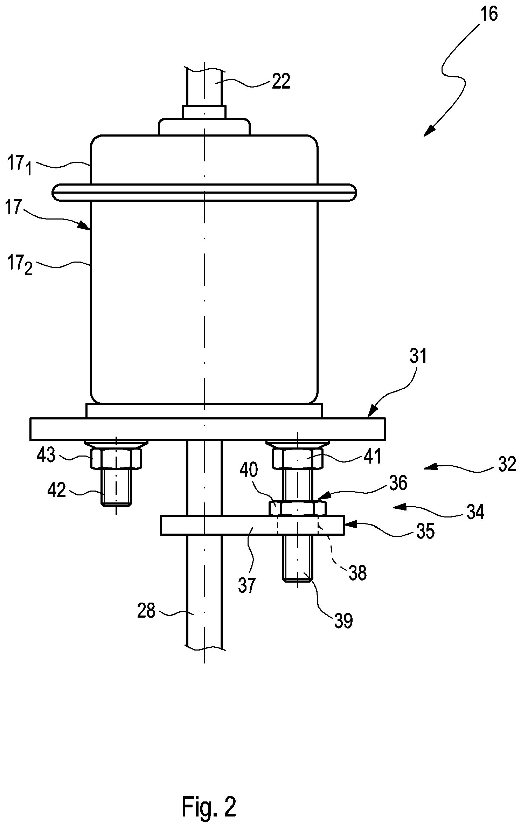

The exhaust gas turbocharger 1 is additionally equipped with an adjusting drive 16, which operates pneumatically and which is provided for actuating the wastegate valve 9. According to Fig. 1 and 2, the adjusting drive 16 comprises a housing 17, in which a separating element 18 corresponding to a double arrow 19 is adjustably arranged. The separating element 18 separates in the housing 17 a control pressure chamber 20 from a reference pressure chamber 21. The control pressure chamber 20 is connected to a high-pressure side 23 of the compressor 4 via a control pressure line 22. The reference pressure chamber 21 in this case is pneumatically connected to an ambience 25 of the adjusting drive 16 via a connection opening 24. The separating element 18 in this case is formed with the help of a diaphragm 26, which is clamped in on the edge side between two housing parts 17₁, 17₂ of the housing 17. A central movable region of the diaphragm 26 is coupled to a piston body 27, on which a drive rod 28 is fastened. Thus, the drive rod 28 is also drive-connected to the diaphragm 26 and thus to the separating element 18. The drive rod 28 is connected to the separating element 18 in the reference pressure chamber 21 and led out of the housing 17. In the housing 17, a resetting spring device 29 is additionally arranged, which drives the separating element 18 with a preload force 30 indicated by an arrow in the direction of the control pressure chamber 20. The resetting spring device 29 in this case is formed by a coil compression spring, which is arranged in the reference pressure chamber 21 and which on the one end supports itself on the housing 17 and on the other end on the separating element 18 or on its piston body 27.

The drive rod 28 is coupled in a suitable manner to the drive mechanism 13 such that a bidirectional adjusting movement 33 of the drive rod 28 indicated by double arrows brings about an adjusting of the drive member 14, in particular a pivoting of the drive member 14 about its pivot axis 15, as a result of which finally an opening or closing of the valve member 11 can be achieved.

The adjusting drive 16 is fastened to a fastening bracket 31, which in turn is fastened to the exhaust gas turbocharger 1, preferentially to the compressor 4.

The adjusting drive 16 introduced here additionally comprises a force adjusting device 32, with the help of which the preload force 30 can be changed, independently of whether the adjusting drive 16 is drive-connected to the wastegate valve 9 or not.

According to Fig. 2, the force adjusting device 32 preferentially comprises an adjustable stop device 34, with the help of which an adjusting travel of the separating element 18 in the direction of the control pressure chamber 20 can be limited. The limitation of the adjusting travel of the separating element 18 defined with the help of the stop device 34 is adjustable, i.e. variable. A variation of this limitation leads to a variation of the preload 30 of the resetting spring device 29.

According to Fig. 2, the stop device 34 interacts with the drive rod 28 for limiting the adjusting travel of the separating element 18 outside the housing 17. To this end, the stop device 34 comprises a rod stop element 35 assigned to the drive rod 28 and a housing stop element 36 assigned to the housing 17. The rod stop element 35 interacts with the housing stop element 36 for limiting the adjusting travel of the separating element 18. In the case of the preferred embodiment introduced here, the housing stop element 36 can be adjusted relative to the housing 17 with respect to its relative position, while the rod stop element 35 is connected to the drive rod 28 in a fixed manner. In the example, the rod stop element 35 is formed through a web 37 connected to the driver rod 28 in a fixed manner, which includes a web opening 38. The housing stop element 36 is formed with the help of a threaded rod 39 which is arranged in a fixed location on the housing 17 and an adjusting nut 40 which is screwed onto the threaded rod 39. The threaded rod 39 is loosely passed through the web opening 38. The adjusting nut 40 can now interact with the web 37 for limiting the adjusting travel of the separating element 18. By turning the adjusting nut 36 along the threaded rod 39, the relative position of the stop between web 37 and adjusting nut 40 changes with respect to the housing 17. Accordingly, the drive rod 28 can dip into the housing 17 more or less deep, as a result of which the position of the separating element 18 within the housing 17 can be correspondingly varied.

With the adjusting drive 16 mounted to the exhaust gas turbocharger 1, the threaded rod 39 penetrates the fastening bracket 31. With the help of a fastening nut 41 screwed onto the threaded rod 39, the housing 17 can now be fixed to the fastening bracket 31. In the shown example, the housing 17 is equipped with a further, shorter threaded rod 42, which carries a further fastening nut 43, in order to fix the housing 17 to the fastening bracket 31.

The adjusting nut 40 is now arranged between the housing 17 and the web 37, so that the limitation of the adjusting travel of the separating element 18 now acts in the direction of the control pressure chamber 20.

The force adjusting device 32 introduced here can now be used in order to adjust the preload force 30 of the resetting spring device 29 in the non-assembled state of the adjusting drive 16. By turning the adjusting nut 40 away from the housing 17, the drive rod 28 is moved out of the housing 17, as a result of which the separating element 18 compresses the resetting spring device 29, which increases the preload force 30. If, by contrast, the adjusting nut 40 is adjusted in the direction of the housing 17, the drive rod 28 moves into the housing 17, so that the separating element 18 brings about a relaxation of the resetting spring device 29, which reduces the preload force 30.

The force adjusting device 32 however can also be used with the adjusting drive 16 mounted to the exhaust gas turbocharger 1 in order to change the preload force 30. By way of the drive coupling between the separating element 18 and the valve member 11, which is effected at 45 via the drive rod 28 and the drive mechanism 13, a closing force 44 indicated in Fig. 1 by an arrow can also be changed by way of a change of the preload force 30, with which the wastegate valve 9 or the valve member 11 is driven in a closing position. Through the drive coupling 45 shown here, a pulling force 46 in this case is transmitted from the drive rod 28 into the drive mechanism 13 via the drive coupling 45. This pulling force 46 is likewise represented in Fig. 1 through the double arrows, which already indicate the bidirectional adjustability of the drive rod 28.

The adjusting device 16 can be additionally utilised as assembly aid for establishing and disconnecting the drive coupling 45 between drive rod 28 and the drive member 14. To this end, the previously mentioned pulling force 46 can be changed with the help of the force adjusting device 32, in particular reduced, so far that the establishing and disconnecting of the drive coupling 45 can be carried out in a simplified manner. In the ideal case, said pulling force 46 can be substantially reduced to the value zero with the help of the force adjusting device 32, which extremely simplifies the establishing and disconnecting of the drive coupling 45.

## Claims

1. A pneumatic adjusting drive for a wastegate valve (9) of a turbine (2) of an exhaust gas turbocharger (1) of an internal combustion engine,
- having a housing (17), in which a separating element (18) separating a control pressure chamber (20) from a reference pressure chamber (21) is adjustably arranged,
- having a drive rod (28) for the drive coupling to the wastegate valve (9), which is connected to the separating element (18) in a fixed manner,
- having a resetting spring device (29) arranged in the housing (17), which drives the separating element (18) with a preload force (30) in the direction of the control pressure chamber (20),
- having a force adjusting device (32) for changing the preload force (30) with the drive rod (28) not coupled to the wastegate valve (9),
**characterized in that**
- the force adjusting device (32) comprises an adjustable stop device (34), which limits an adjusting travel of the separating element (18) in the direction of the control pressure chamber (20),
- the stop device (34) interacts with the drive rod (28) for limiting the adjusting travel of the separating element (18).

2. The adjusting drive according to Claim 1,
**characterized in that**
the stop device (34) interacts with the drive rod (28) for limiting the adjusting travel of the separating element (18) outside the housing (17).

3. The adjusting drive according to Claim 1 or 2,
**characterized in that**
the stop device (34) comprises a rod stop element (35) assigned to the drive rod (28) and a housing stop element (36) assigned to the housing (17), which interact for limiting the adjusting travel of the separating element (18), wherein the rod stop element (35) is adjustable relative to the drive rod (28) and/or the housing stop element (36) is adjustable relative to the housing (17).

4. The adjusting drive according to Claim 3,
**characterized in that**
the rod stop element (35) is connected to the drive rod (28) in a fixed manner, while the housing stop element (36) can be adjusted relative to the housing (17).

5. The adjusting drive according to Claim 3 or 4,
**characterized in that**
- the rod stop element (35) is a web (37) connected to the drive rod (28) in a fixed manner, which comprises a web opening (38),
- the housing stop element (36) comprises a threaded rod (39) fixed in location relative to the housing (17) and an adjusting nut (40) screwed onto the threaded rod (39),
- the threaded rod (39) is passed through the web opening (38),
- the adjusting nut (40) interacts with the web (37) for limiting the adjusting travel of the separating element (18).

6. The adjusting drive according to Claim 5,
**characterized in that**
the threaded rod (39) is connected to the housing (17) in a fixed manner and with the adjusting drive (16) mounted to the exhaust gas turbocharger (1) penetrates a fastening bracket (31) of the exhaust gas turbocharger (1), wherein by means of a fastening nut (41) screwed onto the threaded rod (39) the housing (17) is fastened to the fastening bracket (31).

7. The adjusting drive according to Claim 5 or 6,
**characterized in that**
the adjusting nut (40) is arranged on the threaded rod (39) between the housing (17) and the web (37).

8. An exhaust gas turbocharger having a turbine (2), having a wastegate valve (9) and having an adjusting drive (16) according to any one of the Claims 1 to 7.

9. The exhaust gas turbocharger according to Claim 8,
**characterized in that**
the control pressure chamber (20) is pneumatically connected to a high-pressure side (23) of a compressor (4) of the exhaust gas turbocharger (1).

10. The exhaust gas turbocharger according to Claim 8 or 9,
**characterized in that**
the reference pressure chamber (21) is pneumatically connected to an ambience (25) of the adjusting drive (16).

11. The exhaust gas turbocharger according to any one of the Claims 8 to 10,
**characterized in that**
- the wastegate valve (9) comprises a valve member (11) for controlling an internal bypass (10) of the turbine (2), which interacts with a valve seat (12),
- the wastegate valve (9) comprises a drive mechanism (13) which is drive-connected to the valve member (11) for adjusting the valve member (11), which comprises a drive member (14) arranged on the outside of the turbine (2), which is coupled to the drive rod (28) of the adjusting drive (16).

## Patentansprüche

1. Pneumatik-Einstellantrieb für ein Ladedrucksteuerventil (9) einer Turbine (2) eines Abgasturboladers (1) eines Verbrennungsmotors,
- mit einem Gehäuse (17), in welchem ein Trennelement (18), das eine Steuerdruckkammer (20) von einer Referezdruckkammer (21) trennt, einstellbar angeordnet ist,
- mit einer Antriebsstange (28) für den Antrieb an das Ladedrucksteuerventil (9) koppelnd, die mit dem Trennelement (18) auf fixierte Weise verbunden ist,
- mit einer Rückstellfedereinrichtung (29), die im Gehäuse (17) angeordnet ist, die das Trennelement (18) mit einer Vorspannkraft (30) in der Richtung der Steuerdruckkammer (20) treibt,
- mit einer Krafteinstelleinrichtung (32) zum Verändern der Vorspannkraft (30), wobei die Antriebsstange (28) nicht mit dem Ladedrucksteuerventil (9) gekoppelt ist, **dadurch gekennzeichnet, dass**
- die Krafteinstelleinrichtung (32) eine einstellbare Stoppeinrichtung (34) umfasst, die eine Einstellbeweung des Trennelements (18) in der Richtung der Steuerdruckkammer (20) beschränkt,
- die Stoppeinrichtung (34) mit der Antriebsstange (28) zum Beschränken der Einstellbewegung des Trennelements (18) zusammenwirkt.

2. Einstellantrieb nach Anspruch 1,
**dadurch gekennzeichnet, dass**
die Stoppeinrichtung (34) mit der Antriebsstange (28) zum Beschränken der Einstellbewegung des Trennelements (18) außerhalb des Gehäuses (17) zusammenwirkt.

3. Einstellantrieb nach Anspruch 1 oder 2,
**dadurch gekennzeichnet, dass**
die Stoppeinrichtung (34) ein Stangenstoppelement (35), das der Antriebsstange (28) zugeordnet ist, und ein Gehäusestoppelement (36) umfasst, das dem Gehäuse (17) zugeordnet ist, die zum Beschränken der Einstellbewegung des Trennelements (18) zusammenwirken, wobei das Stangenstoppelement (35) relativ zur Antriebsstange (28) einstellbar ist und/oder das Gehäusestoppelement (36) relativ zum Gehäuse (17) einstellbar ist.

4. Einstellantrieb nach Anspruch 3,
**dadurch gekennzeichnet, dass**
das Stangenstoppelement (35) mit der Antriebsstange (28) in fixierter Weise verbunden ist, während das Gehäusestoppelement (36) relativ zum Gehäuse (17) eingestellt werden kann.

5. Einstellantrieb nach Anspruch 3 oder 4,
**dadurch gekennzeichnet, dass**
- das Stangenstoppelement (35) ein Steg (37) ist, der mit der Antriebsstange (28) in fixierter Weise verbunden ist, das eine Stegöffnung (38) umfasst,
- das Gehäusestoppelement (36) eine Gewindestange (39), die an einem Ort relativ zum Gehäuse (17) fixiert ist, und eine Stellmutter (40) umfasst, die auf die Gewindestange (39) geschraubt ist,
- die Gewindestange (39) durch die Netzöffnung (38) geführt ist,
- die Stellmutter (40) mit dem Steg (37) zum Beschränken der Einstellbewegung des Trennelements (18) zusammenwirkt.

6. Einstellantrieb nach Anspruch 5,
**dadurch gekennzeichnet, dass**
die Gewindestange (39) mit dem Gehäuse (17) in fixierter Weise verbunden ist und, wenn der Einstellantrieb (16) an dem Abgasturbolader (1) montiert ist, eine Befestigungsklammer (31) des Abgasturboladers (1) durchdringt, wobei mittels einer Befestigungsmutter (41), die auf die Gewindestange (39) geschraubt ist, das Gehäuse (17) an der Befestigungsklammer (31) befestigt ist.

7. Einstellantrieb nach Anspruch 5 oder 6,
**dadurch gekennzeichnet, dass**
die Stellmutter (40) auf der Gewindestange (39) zwischen dem Gehäuse (17) und dem Steg (37) angeordnet ist.

8. Abgasturbolader mit einer Turbine (2), mit einem Ladedrucksteuerventil (9) und mit einem Einstellantrieb (16) nach einem der Ansprüche 1 bis 7.

9. Abgasturbolader nach Anspruch 8,
**dadurch gekennzeichnet, dass**
die Steuerdruckkammer (20) pneumatisch mit einer Hochdruckseite (23) eines Kompressors (4) des Abgasturboladers (1) verbunden ist.

10. Abgasturbolader nach Anspruch 8 oder 9,
**dadurch gekennzeichnet, dass**
die Referenzdruckkammer (21) pneumatisch mit einer Umgebung (25) des Einstellantriebs (16) verbunden ist.

11. Abgasturbolader nach einem der Ansprüche 8 bis 10
**dadurch gekennzeichnet, dass**
- das Ladedrucksteuerventil (9) ein Ventilelement (11) zum Steuern einer internen Umgehung (10) der Turbine (2) umfasst, das mit einem Ventilsitz (12) zusammenwirkt,
- das Ladedrucksteuerventil (9) einen Antriebsmechanismus (13) umfasst, der mit dem Ventilelement (11) zum Einstellen des Ventilelements (11) antriebsverbunden ist, der ein Antriebselement (14) umfasst, das außerhalb der Turbine (2) angeordnet ist, das mit der Antriebsstange (28) des Einstellantriebs (16) verbunden ist.

## Revendications

1. Entraînement de réglage pneumatique pour une soupape de décharge (9) d'une turbine (2) d'un turbocompresseur de gaz d'échappement (1) d'un moteur à combustion interne,
- ayant un logement (17), dans lequel un élément de séparation (18) séparant une chambre de pression de commande (20) d'une chambre de pression de référence (21) est agencé de façon réglable,
- ayant une tige d'entraînement (28) pour l'accouplement d'entraînement à la soupape de décharge (9), qui est reliée à l'élément de séparation (18) d'une manière fixe,
- ayant un dispositif de réinitialisation à ressort (29) agencé dans le logement (17), qui entraîne l'élément de séparation (18) avec une force de préchargement (30) dans le sens de la chambre de pression de commande (20),
- ayant un dispositif de réglage de force (32) pour changer la force de préchargement (30) avec la tige d'entraînement (28) non accouplée à la soupape de décharge (9),
**caractérisé en ce que**
- le dispositif de réglage de force (32) comprend un dispositif à butée réglable (34), qui limite une course de réglage de l'élément de séparation (18) dans le sens de la chambre de pression de commande (20),
- le dispositif à butée (34) interagit avec la tige d'entraînement (28) pour limiter la course de réglage de l'élément de séparation (18).

2. Entraînement de réglage selon la revendication 1,
**caractérisé en ce que**
le dispositif à butée (34) interagit avec la tige d'entraînement (28) pour limiter la course de réglage de l'élément de séparation (18) à l'extérieur du logement (17).

3. Entraînement de réglage selon la revendication 1 ou 2,
**caractérisé en ce que**
le dispositif à butée (34) comprend un élément formant butée de tige (35) attribué à la tige d'entraînement (28) et un élément formant butée de logement (36) attribué au logement (17), qui interagit pour limiter la course de réglage de l'élément de séparation (18), dans lequel l'élément formant butée de tige (35) est réglable par rapport à la tige d'entraînement (28) et/ou l'élément formant butée de logement (36) est réglable par rapport au logement (17).

4. Entraînement de réglage selon la revendication 3,
**caractérisé en ce que**
l'élément formant butée de tige (35) est relié à la tige d'entraînement (28) d'une manière fixe, tandis que l'élément formant butée de logement (36) peut être réglé par rapport au logement (17).

5. Entraînement de réglage selon la revendication 3 ou 4,
**caractérisé en ce que**
- l'élément formant butée de tige (35) est une armature (37) reliée à la tige d'entraînement (28) d'une manière fixe, qui comprend une ouverture d'armature (38),
- l'élément formant butée de logement (36) comprend une tige filetée (39) fixe dans un emplacement par rapport au logement (17) et un écrou de réglage (40) vissée sur la tige filetée (39),
- la tige filetée (39) est passée à travers l'ouverture d'armature (38),
- l'écrou de réglage (40) interagit avec l'armature (37) pour limiter la course de réglage de l'élément de séparation (18).

6. Entraînement de réglage selon la revendication 5,
**caractérisé en ce que**
la tige filetée (39) est reliée au logement (17) d'une manière fixe et avec l'entraînement de réglage (16) monté sur le turbocompresseur de gaz d'échappement (1) pénètre dans une patte d'attache (31) du turbocompresseur de gaz d'échappement (1), dans lequel au moyen d'un écrou d'attache (41) vissé sur la tige filetée (39), le logement (17) est attaché à la patte d'attache (31).

7. Entraînement de réglage selon la revendication 5 ou 6,
**caractérisé en ce que**
l'écrou de réglage (40) est agencé sur la tige filetée (39) entre le logement (17) et l'armature (37).

8. Turbocompresseur de gaz d'échappement ayant une turbine (2), ayant une soupape de décharge (9) et ayant un entraînement de réglage (16) selon l'une quelconque des revendications 1 à 7.

9. Turbocompresseur de gaz d'échappement selon la revendication 8,
**caractérisé en ce que**
la chambre de pression de commande (20) est reliée de façon pneumatique à un côté haute pression (23) d'un compresseur (4) du turbocompresseur de gaz d'échappement (1).

10. Turbocompresseur de gaz d'échappement selon la revendication 8 ou 9,
**caractérisé en ce que**
la chambre de pression de référence (21) est reliée de façon pneumatique à une ambiance (25) de l'entraînement de réglage (16).

11. Turbocompresseur de gaz d'échappement selon l'une quelconque des revendications 8 à 10,
**caractérisé en ce que**
- la soupape de décharge (9) comprend un élément de soupape (11) pour commander un contournement interne (10) de la turbine (2), qui interagit avec un siège de soupape (12),
- la soupape de décharge (9) comprend un mécanisme d'entraînement (13) qui est relié par entraînement à l'élément de soupape (11) pour régler l'élément de soupape (11),
qui comprend un élément d'entraînement (14) agencé sur l'extérieur de la turbine (2), qui est couplée à la tige d'entraînement (28) de l'entraînement de réglage (16).
